# EUROPEAN PATENT SPECIFICATION

(11) **EP 1 357 996 B1**
(45) Date of publication and mention of the grant of the patent: **11.10.2006**
(21) Application number: 02715956.5
(22) Date of filing: 16.01.2002
(51) Int. Cl.: B01D 46/26

(54) **ROTATING FILTER**
ROTIERENDE FILTER
FILTRE ROTATIF CONTINU UTILISE DANS LA PRODUCTION DE LAINE DE ROCHE

(30) Priority: 05.02.2001 SI 200100028
(43) Date of publication of application: 05.11.2003
(73) Proprietor: Termo, D.D., Industrija Termicnih Izolacij, Skofja Loka, 4220 Skofja Loka (SI)
(72) Inventor: BRADESKO, Franc, 4224 Skofja Loka (SI); PETERNELJ, Andrej, 4224 Skofja Loka (SI); MIHOVEC, Bojan, 4224 Skofja Loka (SI); SIROK, Brane, 3620 Vrhnika (SI)
(74) Representative: Hano, Christian
(86) International application number: PCT/SI2002/000001
(87) International publication number: WO 2002/062451

(56) References cited:
- EP-A- 0 566 113
- DE-A- 4 440 773
- US-A- 3 395 901
- US-A- 4 253 855

## Description

The invention relates to a continuous rotational filter. It is used in the production of rock wool for removing fiber particles from the air generated by the suction of the technological air from the collection chamber.

One of the principal units of a rock wool production line is the collection chamber, where the primary layer of fibers is formed through deposition onto moving grates. The structure of the layer, characterized by the geometrical and material properties of the fibers, typically depends on the aerodynamic and velocity conditions at the suction point where the technological air is aspirated from the collection chamber.

The aerodynamic conditions depend on the local velocity in the air flow of the rotor blow-off and of the volume flow of the air generated by the suction fan in the collection chamber. The local velocity conditions affect the microstructure of the primary rock wool layer, as reflected by the local arrangement of the fibers on the moving grates and by the local areal mass of the layer of fibers. The structure of the primary layer of fibers in the technological process significantly affects the quality of the final product. Achieving a homogenous primary layer of rock wool in the collection chamber is an essential prerequisite for ensuring a final product of quality. The variations of the aerodynamic properties as such depend highly on the variations of the resistance properties of the suction system, which is composed of the following vital elements:
- collection chamber
- suction pipeline
- suction filter
- installed radial fan
- pressure pipeline, connected to the central smokestack

During operation, part of the fibers pass through the grate structure of the lamellar conveyor together with the phenol binder. With the air flow, the fibers enter in the filter zone whose function is to depurate the air flow at the suction point from the collection chamber. The phenolized vapors, i. e. the binder and the fibers that have passed through the lamellar conveyor of the collection chamber, accumulate on the surface of the filter. Due to the continuous transportation of the phenol vapors and the rock wool fibers, the resistance properties of the installed filter vary over time. The variation of the resistance properties of the filter is reflected in the increase of the pressure difference inside the filter, which causes a variation of the operating point of the installed conveying fan and a variation of the volume flow in the aspiration system. By cleaning the filters - replacing the filter pads and cleaning the conveyor channels - the operational state is periodically maintained, ensuring the desired quality of the product.

The problem that remains yet to be solved in a satisfactory manner is the variation of the aerodynamic properties over time, due to the occlusion of the filters and, consequently, the interruption of the process in order for the filters to be cleaned.

US 4 253 855 discloses a rotational filter having a filter cylinder rotating opposite to the tangential intake of air containing rock wool fibers. The fibers are doffed from the filter cylinder by suction nozzles which are adjacent to the filter cylinder. The filter screen is cleaned by periodically jetting hot dry air through the screen into the suction nozzles.

The problem underlying the invention is to provide a rotating filter having constant aerodynamic properties.

This problem is solved by a rotating filter comprising the features of claim 1. Preferred embodiments are claimed in claims 2 and 3.

The rotating cylinder of the present invention ensures continuous filtering by means of the two counter rotating cylinders. Hence, constant resistance properties at the suction point are maintained ensuring constant aerodynamic conditions in the zone where the primary layer of rockwool is formed.

The continuous rotational filter in the production of rock wool according to the present invention shall be described hereinafter with reference to an exemplary embodiment and an accompanying drawing, where:

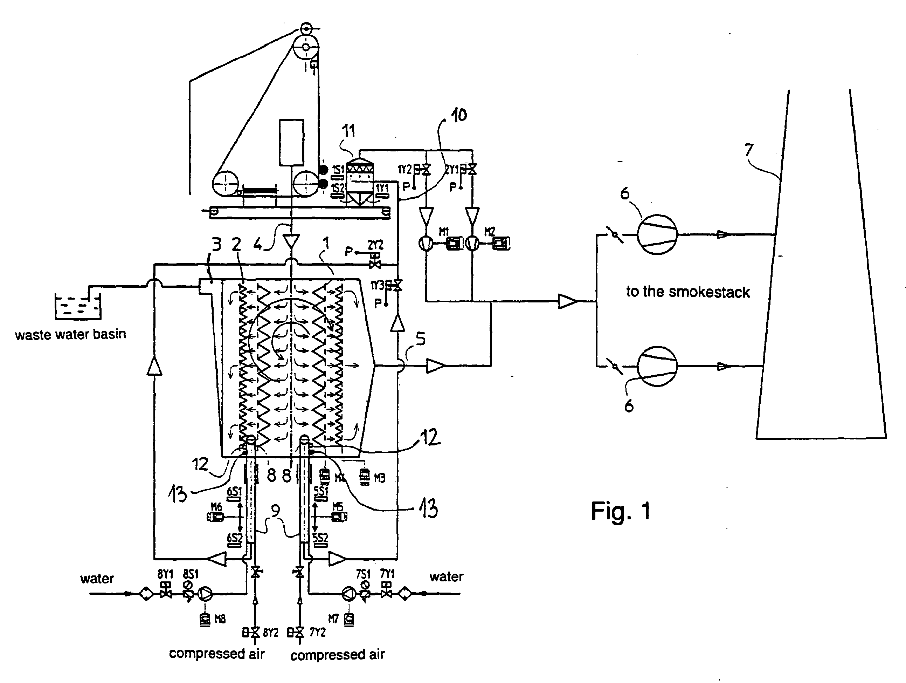

Fig. 1 is a schematic drawing of the rotational filter in the production of rock wool.

In the collection chamber 21, there is an aspirator 22 which aspirates the technological air together with the remains of the fibers and of the phenol binder. Thereupon, the said air enters into the inner rotating cylinder 1 in an axially symmetrical manner. The filtering surface of the inner cylinder 1 consists of a steel grid with a perforation in the range of 1 to 0,1 mm. The steel grid is supported by a bearing perforated sheet metal, preferably having a diameter D=10-20 mm, a partition t=13-25 mm and a thickness δ=2 mm. The air flow passes through the grid and the perforated sheet metal of the inner cylinder 1 into the interspace formed by the inner cylinder 1 and the outer rotating cylinder 2. The structure of the outer cylinder 2, acting as a fine filter, is determined by the perforation of the steel grid in the range of δ=0,2 to 0,4 mm and by the perforated bearing sheet metal, preferably having a diameter D=10-20 mm, a partition t=13-25, and a thickness δ=2 mm.

The inner cylinder 1 and the outer cylinder 2 rotate in opposite directions and are driven separately and oppositely by motors M3 and M4, respectively. The rotational velocities of both cylinders are synchronized and adjustable in frequency. The rotational frequency of both depends on the current load on the filter. The load on the rotational filter 3 is measured by the pressure difference between the ingress channel 4 and the egress channel 5 of the filter 3. The fibers which, together with the air flow, have passed through the lamellar conveyor of the collection chamber 21 and the ingress channel 4 into the inner cylinder 1 of the rotational filter, as well as part of the binder, i. e. a solution of phenol and water, accumulate on the surfaces of the filter. The geometrical characteristics of the filter surfaces of the inner and outer cylinder: the perforation, the thickness of the steel filter wires, and the characteristics of the bearing perforated sheet metal were experimentally chosen on the basis of a simulated accumulation of fibers on the filter surfaces and the measurement of the corresponding pressure differences on the filter 3 depending on the expected volume flow-rate of air and of the required rate of accumulation on the filter 3. Upon passing through the outer cylinder 2 of the rotational filter 3 the air flow exits radially from the outer cylindrical housing. Passing through the channel 5 and the radial fan 6, the air is released through the smokestack 7 into the atmosphere.

Continuous cleaning of the filtrating surfaces is implemented on both the inner cylinder 1 and the outer cylinder 2 of the rotational filter 3. In both cases, the cleaning process is composed of the same functional segments.

The cleaning on the inner cylinder 1 and on the outer cylinder 4 of the filter 3 is performed in combination with local rinsing, blowing out and aspiration of the filter grid. The local aspiration of the grid is performed with an aerodynamically shaped suction nozzle 8. The suction nozzle 8 is situated on the inner side of the cylinder, so that the air flow entering the suction nozzle 8 captures the scrap fibers located on the inner filtering surface or grid. The suction nozzle 8 is fixed to the telescopic pipe 9, which allows the suction nozzle 8 to move axially along the filtrating cylinder over the entire active surface of the rotational filter 3, and is restricted by two pairs of adjustable stoppers 5S1, 6S1 and 5S2, 6S2 respectively. The axial movement of the telescopic pipes is effected by means of drives M5 and M6, respectively. In order to prevent the scrap material (i.e. the fibers) from getting attached to the walls of the telescopic pipe 9, said pipe 9 is cooled in a double coat with water. Via a flexible tube, the telescopic pipe 9 is connected to the transport pipeline system 10 and to the regulating valves 2Y2 and 1Y3 with the stationary filter 11, the purpose of which is to collect the scrap material. The stationary filter 11 is implemented with non-continuous discharging, controlled by the level-switches 1S1 and 1S2. The volume flow through the depuration system is generated by the alternating turboblowers M1 and M2, respectively. At the pressure side of the turboblowers M1 and M2, the depurated air is discharged into the atmosphere, or, alternatively, returned into the depuration system.

The second phase of the cleaning process - the local rinsing and blowing out - is performed by a consecutively arranged series of sprinkling nozzles 12 and blowing nozzles 13, which are synchronously fixed to the telescopic pipe 9 system. The nozzles 12 and 13, respectively, move simultaneously with the suction nozzle 8 in the axial direction of the rotational filter 3. The cleaning water flow is generated by the pumps M7 for the inner cylinder 1, and M8 for the outer cylinder 2 of the filter 3. The valves 8Y1 and 7Y1 have the purpose of regulating the water supply to the nozzles 12, and, in addition, regulating pressure switches 8S1 and 7S1 are added to the system. Through the valves 7Y2 and 8Y2, respectively, the compressed air is conveyed to the blowing nozzles 13. The cleaning of the filter 3 is performed as follows: while the cylinders 1 and 2 are rotating in opposite directions, the sprinkling nozzles 12, the blowing nozzles 13, and the nozzles 8 on the telescopic pipe 9 axially move past the filters of the cylinders 1 and 2, thus rinsing, blowing out and aspirating the said filters. The waste water originating from the rinsing partly flows away to the bottom of the filter 3, proceeding to the waste water basin, and partly it is aspirated through the nozzles 8 and carried off via the pipeline system 10 to the stationary filter 11.

## Claims

1. A continuous rotational filter in the production of rock wool comprising an inlet channel (4) for the passage of the technological air from a collection chamber an outlet channel (5) for the conveyance of purified air preferably into a smokestack, an inner filter cylinder (1) and an outer filter cylinder (2) rotatable synchronously in opposite directions, and telescopic pipes (9) having suction nozzles (8), sprinkling nozzles (12) and blowing nozzles (13) and being axially movable over the active filter surface of a corresponding one of the inner and outer filter cylinders (1, 2).

2. A continuous rotational filter as claimed in Claim 1, **characterized in that** the filtering surface of the inner cylinder (1) consists of a steel grid with a perforation in the range of 1 to 0,1 mm, and that the steel grid is supported by a bearing perforated sheet metal, preferably having a diameter D=10-20 mm, a partition t=13-25 mm and a thickness of the perforated sheet metal δ=2 mm.

3. A continuous rotational filter as claimed in Claim 1, **characterized in that** the filtering surface of the outer cylinder (2) consists of a steel grid with a perforation in the range of δ=0,2 to 0,4 mm, and of a perforated bearing sheet metal, preferably having a diameter D=10-20 mm, a partition t=13-25, and a thickness of the perforated sheet metal δ=2 mm.

## Patentansprüche

1. Durchlaufdrehfilter für die Herstellung von Steinwolle
- mit einem Einlasskanal (4) für den Durchgang von technologischer Luft aus einer Sammelkammer,
- mit einem Auslasskanal (5) zum Fördern von gereinigter Luft vorzugsweise in einen Schornstein,
- mit einem inneren Filterzylinder (1) und einem äußeren Filterzylinder (2), die synchron in entgegengesetzte Richtungen drehbar sind, und
- mit Teleskoprohren (9), die Saugdüsen (8), Sprühdüsen (12) und Blasdüsen (13) haben und axial über die aktive Filteroberfläche eines entsprechenden Zylinders des inneren und äußeren Filterzylinders (1, 2) bewegbar sind.

2. Durchlaufdrehfilter nach Anspruch 1, **dadurch gekennzeichnet,**
- **dass** die Filteroberfläche des inneren Zylinders (1) aus einem Stahlgitter mit einer Perforation im Bereich von 1 bis 0,1 mm besteht und
- **dass** das Stahlgitter von einem tragenden perforierten Metallblech gehalten ist, das vorzugsweise einen Durchmesser D von 10 bis 20 mm, eine Teilung t von 13 bis 25 mm und eine Dicke des perforierten Metallblechs δ von 2 mm hat.

3. Durchlaufdrehfilter nach Anspruch 1, **dadurch gekennzeichnet, dass** die Filteroberfläche des äußeren Zylinders (2) aus einem Stahlgitter mit einer Perforation im Bereich von δ von 0,2 bis 0,4 mm und aus einem perforierten tragenden Metallblech besteht, das vorzugsweise einen Durchmesser D von 10 bis 20 mm, eine Teilung t von 13 bis 25 mm und eine Dicke des perforierten Metallblechs δ von 2 mm hat.

## Revendications

1. Filtre rotatif continu utilisé dans la production de laine de roche comprenant un canal d'entrée (4) pour le passage de l'air technologique venant d'une enceinte de collecte, un canal de sortie (5) pour le transport de l'air purifié préférablement dans une cheminée, un cylindre de filtre interne (1) et un cylindre de filtre externe (2) pouvant entrer en rotation de manière synchrone dans des directions opposées, et des tuyaux télescopiques (9) ayant des buses d'aspiration (8), des buses d'aspergement (12) et des buses de soufflage (13) et étant axialement mobiles sur la surface de filtre active d'à chaque fois un des cylindres de filtre interne et externe (1, 2).

2. Filtre rotatif continu selon la revendication 1, **caractérisé en ce que** la surface filtrante du cylindre interne (1) consiste en une grille en acier avec une perforation dans la plage de 1 à 0,1 mm, et que la grille en acier est supportée par un métal en feuille perforé de support, ayant préférablement un diamètre D = 10 à 20 mm, une partition t = 13 à 25 mm et une épaisseur du métal en feuille perforé δ=2 mm.

3. Filtre rotatif continu selon la revendication 1, **caractérisé en ce que** la surface filtrante du cylindre externe (2) consiste en une grille en acier avec une perforation dans la plage de δ= 0,2 à 0,4 mm, et d'un métal en feuille perforé de support, ayant préférablement un diamètre D = 10 à 20 mm, une partition t = 13 à 25, et une épaisseur du métal en feuille perforé δ= 2 mm.
